# EUROPEAN PATENT APPLICATION

(11) **EP 1 746 592 A2**
(43) Date of publication of application: **24.01.2007**
(21) Application number: 06253761.8
(22) Date of filing: 18.07.2006
(51) Int. Cl.: G11B 15/60

(54) **Tape drive having improved tape path and associated methods**

(30) Priority: 18.07.2005 US 184317
(71) Applicant: QUANTUM CORPORATION, San Jose, CA 95110 (US)
(72) Inventor: Sachuk, Daniel B., Lansdale, PA 19446 (US)
(74) Representative: Charig, Raymond Julian

(57) **Abstract**

In one example of one aspect of the invention, a tape drive is provided. The tape drive includes a housing configured to receive a storage cartridge, the housing having a take-up reel and a plurality of guide elements disposed therein. The guide elements are configured to guide storage tape from the storage cartridge to the take-up reel along a tape path, the tape path passing adjacent a data transducer head (e.g., a read and/or write head) and wrapping a portion of the take-up reel at a first location and winding onto the take-up reel at a second location. The first location and the second location may be positioned along the tape path between the data transducer head and the take-up reel.

## Description

### BACKGROUND

### Field:

This relates generally to storage media drives, and in one aspect to a magnetic storage media drive having a tape path from a supply reel to a take-up reel (or machine reel) within the storage media drive.

### Description of Related Art:

Digital tape-recording remains a viable solution for the storage of large amounts of data in computer systems. Increased data storage capacity and retrieval performance is desired of all commercially viable mass storage devices and media. In the case of linear streaming tape recording, a popular trend is toward multi head, multi-channel fixed or servo (positioning) head structures with narrowed recording gaps and data track widths so that many linear data tracks may be achieved on a tape medium of a predetermined width, such as one-half inch width tape. To increase the storage density for a given cartridge size, the bits on the tape may be written to smaller areas and on a plurality of parallel longitudinal tracks. As more tracks are recorded on the tape, each track becomes increasingly narrow. As the tracks become more narrow, the tape becomes more susceptible to errors caused from the tape shifting up or down (often referred to as lateral tape motion or "LTM") in a direction perpendicular to the tape travel path as the tape passes by the magnetic head. In order to maintain proper alignment of the head with the data tracks on the tape, the tape is generally mechanically constrained to minimize lateral tape motion and data retrieval errors.

Lateral tape motion is generally defined as the peak-to-peak distance of the undesirable movement (in-plane) of the tape perpendicular to its prescribed longitudinal direction of motion past a read/write head. Lateral tape motion and the ability to compensate for and reduce lateral tape motion is a major limiting factor in determining the minimum width of a track and the minimum spacing between tracks on the tape. Thus, as lateral tape motion is reduced, more tracks may be stored on the tape and the storage capacity increases accordingly.

Tape substrates are also being made thinner to increase data storage for a given cartridge size. The thinner tape allows more tape to be contained within the same size diameter reel cartridges, e.g., a cartridge about four inches square and one inch high for use with a five and one quarter inch tape drive. Increasing the tape within a given cartridge increases the data storage capacity of the cartridge. Thinner tapes, however, are generally less rigid making them more susceptible to lateral tape motion errors and damage or wear to the tape from the tape drive assembly. For example, guides and rollers that may be used, at least in part, to reduce lateral tape motion and define a tape path through a tape drive adjacent a read/write head may damage edge portions of the tape.

One approach to minimize lateral tape motion tracking errors is to provide a multi-roller tape guide structure within a tape drive, such as the type described in commonly assigned U.S. Patent No. 5,414,585, entitled "Rotating Tape Edge Guide," the disclosure thereof being incorporated herein by reference in its entirety. Such an approach may provide a reduction in both lateral tape motion and possible damage to the tape during guiding.

The advent of new head technologies, however, such as magneto-resistive read heads, and new higher coercivity recording media, data track widths have become increasingly small, and many additional data tracks may be defined on the tape. Unfortunately, lateral tape motion remains a limiting factor, and at certain data track width dimensions and data track densities, it is not possible to follow the tape accurately enough to provide reliable performance during reading and writing operations. Further, as tape thickness is decreased tape edge damage and lateral tape motion become an increasingly greater problem.

Therefore, conventional systems have not been able to keep pace with the increased data storage capacity desired for magnetic tape storage media, including increasingly narrow data tracks and thinner storage media. A need exists therefore for a device and method to reduce lateral tape motion and reduce tape edge damage to potentially allow for increased data storage capabilities.

### BRIEF SUMMARY

In one aspect provided herein, a storage media drive is provided. In one example, the media drive comprises a housing configured to receive a storage cartridge, the housing having a take-up reel and a plurality of guide elements disposed therein. The guide elements are configured to guide a storage tape from the storage cartridge to the take-up reel along a tape path, the tape path passing adjacent a data transducer head (e.g., a read and/or write head) and wrapping a portion of the take-up reel at a first location and winding onto the take-up reel at a second location. The first location and the second location may be positioned along the tape path between the data transducer head and the take-up reel.

In one example, a first portion of the tape path from the supply reel to the data transducer head and a second portion of the tape path from the take-up reel to the data transducer head are approximately equal in length. In another example, the second portion has a distance that is at least 80% of the distance of the first portion. In yet another example, the distance of the first portion and second portion are proportional to the amount of lateral tape motion produced along the first portion and second portion.

According to another aspect provided herein, a media drive comprises a first reel, a second reel, a data transducer head, and a plurality of guide elements. The plurality of guide elements are positioned to guide a storage tape from the first reel to the second reel, wherein the tape passes adjacent the data transducer head, wraps a portion of the second reel at a first location, and winds onto the second reel at a second location.

According to another aspect provided herein, a method for moving a data storage tape within a media drive is provided. In one example, the method includes streaming a storage tape along a tape path from a supply reel to a take-up reel, the tape path passing adjacent a data transducer head, wherein the tape path wraps a portion of the take-up reel at a first location and winds onto the take-up reel at a second location.

The present invention is better understood upon consideration of the detailed description below in conjunction with the accompanying drawings and claims.

### BRIEF DESCRIPTION OF THE DRAWINGS

**Figure 1** illustrates a top view of a prior art magnetic tape drive and magnetic tape cartridge;

**Figure 2** illustrates a top view of an exemplary tape drive according to one aspect provided herein;

**Figures 3 and 4** illustrate views of various exemplary tape drives having various exemplary tape paths defined therein;

**Figures 5A-5C** illustrate cross-sectional views of exemplary guide elements; and

**Figures 6A-6D** illustrate top views of exemplary guide elements.

### DETAILED DESCRIPTION

The following description is presented to enable any person skilled in the art to make and use various aspects and examples of the invention. Descriptions of specific materials, techniques, and applications are provided only as examples. Various modifications to the examples described herein will be readily apparent to those skilled in the art, and the general principles defined herein may be applied to other examples and applications without departing from the spirit and scope of the invention. Thus, the present invention is not intended to be limited to the examples described and shown, but is to be accorded the scope consistent with the appended claims.

According to one aspect described herein, a storage media drive includes a take-up reel (sometimes referred to herein as a "machine reel"), a data transducer head, and a plurality of guide elements positioned to define a tape path between a supply reel and the take-up reel. In one particular example, the housing includes a plurality of guide elements positioned to guide or stream the tape from the supply reel to the take-up reel along a tape path, wherein the tape path includes wrapping a portion of the take-up reel (e.g., the tape pack wound on take-up reel) at a first location and winding onto the take-up reel at a second location. The exemplary tape path may provide for a greater tape path distance between reels (e.g., between the take-up reel and the cartridge reel) than conventional tape drive systems, which may provide advantages in guiding the tape during operation.

In another example, the guide elements are positioned to provide nearly equal tape path distances from the supply reel to the data transducer head (e.g., read and/or write head) and from the data transducer head to the take-up reel. Equal tape path lengths may be useful controlling LTM when both the supply reel and machine reel produce near equal amounts of LTM. In one example, if one reel produces considerably more LTM, it may be advantageous to increase the tape span length from that reel to the data transducer head. In one instance, the path length from the data transducer head to the take-up reel is at least 80% of the length of the tape path from the supply reel to the data transducer head. In other instances the relative path length from the data transducer head to the take-up reel may be between 80-120%, 90-110%, or 95-105% of the length of the tape path from the supply reel to the data transducer head.

The potential for tape edge damage is generally a function of the force applied to the tape edges (e.g., during guiding the tape). In particular, for a given tape thickness and material, the guiding force applied to the tape edges will generally be proportional to the damage and wear to the tape edge. The guiding force is generally inversely proportional to the path length or tape span length. For example, the guiding force is generally proportional to 1/L³, where L is the tape path length from the supply reel to the take-up reel. Therefore, the potential for tape edge damage may be reduced by increasing the path length of the tape between the supply reel and the take-up reel and reducing the force needed for guiding the tape in response to LTM. Further, equalizing the tape path length before and after passing the media drive head may reduce the potential for tape edge damage.

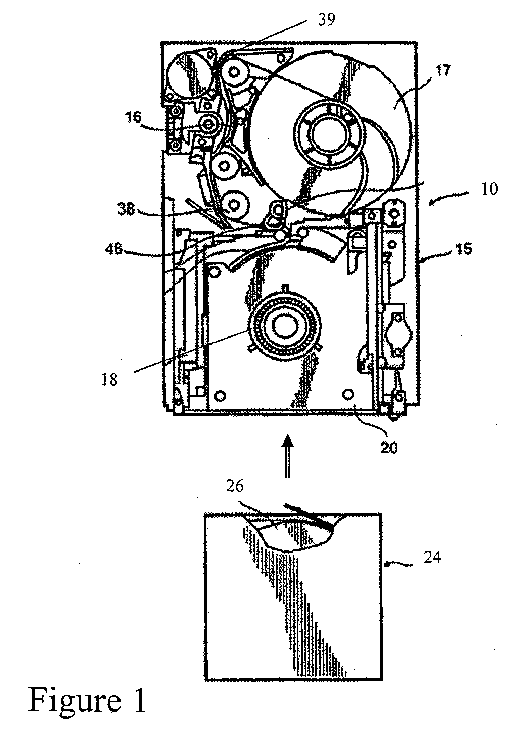

Referring initially to Figure 1, a conventional tape drive 10 is illustrated that may be used with a typical magnetic storage tape cartridge 24. Tape drive 10 generally includes a tape drive housing 15, a data transducer head, i.e., a read and/or write head 16, a machine or take-up reel 17, and a receiver 20. Tape drive 10 is used in conjunction with a cartridge 24, which houses a storage tape on supply reel 26. Receiver slot 20 is configured to receive a suitable cartridge 24 therein adjacent reel driver 18. Tape drive 10 may also include a door and various mechanisms for receiving and ejecting cartridge 24. When cartridge 24 is received in receiver slot 20 a buckler motor 46 or the like may engage a cartridge leader 28 and stream the storage tape along a tape path within tape drive 10, passing read/write head 16 and onto take-up reel 17. The tape path may pass or be guided by various tape guides 39, rollers 38, one or more read/write heads 16, and the like before being wound upon take-up reel 17.

Tape drive 10 is typically installed within or associated with a computer (not shown) or computer network. Additionally, tape drive 10 may be used as part of an automated tape library having a plurality of tape cartridges and a robotic transfer mechanism to transport cartridges to one or more tape drives. An exemplary storage library is described in U.S. Patent No. 5,760,995, entitled "MULTI-DRIVE, MULTI-MAGAZINE MASS STORAGE AND RETRIEVAL UNIT FOR TAPE CARTRIDGES," which is hereby incorporated by reference in its entirety.

Cartridge 24 generally includes a substantially rectangular cartridge housing that encloses cartridge reel 26 (sometimes referred to as the "supply reel") and storage tape wound thereon. Cartridge 24 may further include a cartridge door to protect storage tape therein and a cartridge leader 28, which is exposed when the door is open. Storage tape stores information in a form, e.g., digital, that may be subsequently retrieved if desired. Storage tape may be approximately one-half inch in width, but larger and smaller widths are contemplated, e.g., 4-8 mm. Storage tape may have a thickness of approximately .5 mils (.0005 inches) or thinner. Typically, storage tape includes a storage surface on one side of storage tape that may be divided into a plurality of parallel tracks along the length of storage tape. Alternatively, the data may be recorded in diagonal strips across storage tape.

It is noted that various other features of a tape drive may be included, which are not shown or described, for example, various buckler systems, rollers, tape guides, receiving mechanisms, dampers, and the like may be included. A detailed description of various components of a tape drive system that may be used is provided in U.S. Patent No. 6,095,445, entitled "CARTRIDGE BUCKLER FOR A TAPE DRIVE," which is incorporated herein by reference in its entirety. A representative magnetic tape drive for which an exemplary storage cartridge may be used is sold by Quantum Corporation under the trademark SDLT™ 320 or 600. Further, various examples herein are described with reference to magnetic tape drives; it will be understood by one of ordinary skill in the art, however, that the description of magnetic tape drives is illustrative only and the exemplary systems and methods are applicable to various data storage tape drives including, but not limited to, magnetic, optical, and magnetic/optical drive systems.

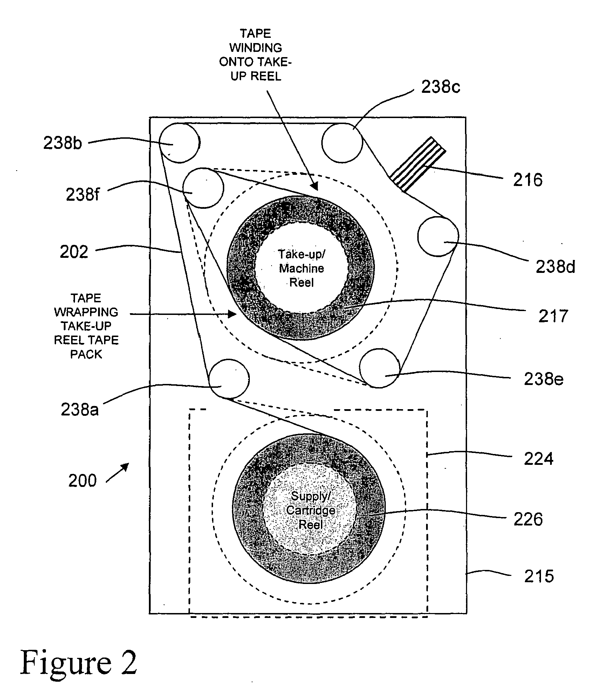

**Figure 2** illustrates a schematic cross-sectional view of an exemplary media drive 200, including a cartridge 224 disposed within housing 215 of media drive 200. Typically, storage tape 202 is initially wound on the cartridge or supply reel 226 and between flanges (not shown) of supply reel 226, which may be separated by a distance slightly greater than the width of storage tape 202. Guide elements 238a-f are positioned with housing 215 to guide tape 202 along a tape path from supply reel 226 to take-up reel 217 (and back along a similar tape path from take-up reel 217 to supply reel 226). The tape path is guided past at least one data transducer head 216 for reading and/or writing operations to tape 202. Housing 215 may include any open or closed frame suitable for receiving a cartridge 224.

For a variety of reasons, storage tape 202 may be offset from a desired tape path through media drive 200 and adjacent read/write head 216 and guide elements 238a-f provide a guiding force to one or both edges of tape 202 during operation. For example, tape 202 may be wound onto cartridge reel 226 unevenly such that as storage tape 202 unwinds it is offset from the first guiding element 23 8a. Further, supply reel 226 may be offset from a desired tape path and guide elements 238a-f due to various mechanical tolerances, e.g., including reel driver (not shown) engaging cartridge 224. Similar uneven tape stacking and misalignment of the reel may be possible at take-up reel 217. As the displacement of tape 202 for a desired path and the resulting guiding forces from guide elements 23 8a-f increase, the potential for tape edge damage may increase accordingly. Damage to the edges of storage tape 202 may increase the propensity for undesirable LTM during operation.

In this example, guide elements 238a-f, and in particular, guide elements 238f and 238e, are positioned within media drive 200 such that the path of storage tape 202 wraps (but is not wound to) a portion of the tape pack of take-up reel 217 at a first location (as noted in **Figure 2**) before being wound to take-up reel 217 at a second location (also noted in **Figure 2**). For example, as tape 202 moves from cartridge 224 to machine reel 217, guide elements 238a-f guide tape through drive 200 and adjacent head 216 for reading and/or writing processes. As tape 202 engages or wraps the tape pack of take-up reel 217 and underlying tape 202 between guide elements 238e and 238f, tape 202 may "float" on a thin layer of air trapped between tape 202 and underlying wound tape. The thin layer of air reduces friction between tape 202 and underlying wound tape and allows tape 202 to be guided by guide elements 238a-f over an increased path length distance from supply reel 226 to take-up reel 217 (compared with a typical tape dive absent guide element 238f),

Further, the addition of guide element 23 8f and the feature of wrapping take-up reel 217 provides a longer tape path from transducer head 216 to take-up reel 217, and in one example, provides nearly equal path lengths before and after transducer head 216. The tape span or path length for which tape 202 may be guided generally includes the distance from where storage tape 202 initially leaves supply reel 226 to where storage tape 202 is wound to machine reel 217. The addition of guide element 238f, which guides storage tape 202 to wrap a portion of reel 217 generally increases the path length of tape 202 over conventional drive configurations. For example, typically, the tape path length between a take-up reel and drive head is relatively short compared to the tape path length from the supply reel to the drive head. Increasing the path length from the transducer head 216 to the take-up reel 217 (in one example, to be substantially equal to the path length from supply reel 226 to transducer head 216), may reduce guiding forces on tape 202 (in particular, on the edges of tape 202). Accordingly, the configuration of guide elements 238a-f provides an increased path length and potentially reduces guiding forces and tape edge damage during operation.

In one example, the path length from transducer head 216 to take-up reel 217 is at least 80% of the path length form supply reel 226 to data transducer head 216. In other instances the relative path length of from take-up reel 217 to data transducer head 216 may be between 80-120%, 90-110%, or 95-105% of the length of the tape path from supply reel 226 to data transducer head 216.

In another example, the path length from supply reel 226 to head 216 and the path length from head 216 to take-up reel 217 may be varied depending on the expected amount of LTM along these portions of the path length. For example, if more LTM is produced by supply reel 226, the path length from supply reel 226 to head 216 may be greater than from head 216 to take-up reel 217, or vice versa.

Guide elements 238a-f are illustrated in this example as cylindrical elements. Guide elements 238a-f, however, may include a variety of different shaped devices and include a variety of contoured surfaces. For example, it is contemplated that guide elements 238a-f may include a stationary pin or rod, roller, contoured surface, or the like. Guide elements 238a-f may include a roller rotatably mounted within housing 215 to allow each guide element 238a-f to rotate as tape 202 passes by, which may reduce frictional forces and potential wear and damage to tape 202. Alternatively, one or more guide elements 238a-f may include stationary elements, e.g., pins or stationary guiding surfaces, which may provide frictional dampening of LTM.

The diameter and position of each guide element 238a-f may vary within media drive housing 215 depending on, e.g., the particular application, dimensions of tape 202, housing 215, cartridge 224, and desired tape path length between supply reel 226 and head 216 and the desired tape path length from head 216 to take-up reel 217. In other examples, different numbers of guide elements may be included.

Media drive 200 and cartridge 224 may include various sizes, shapes, and configurations. For example, drive 200 may include a 5.25 inch (130 mm) form factor drive, a 3.5 inch (90 mm) form factor drive, but various other drive sizes and configurations are contemplated and possible. Cartridge 224 may include various storage media such as magnetic, optical, magnetic-optical, or other suitable storage media. In one example, cartridge 224 may include a tape cartridge having one or more internal guide members as described in co-pending patent application serial no. 10/627,371, entitled, "SINGLE REEL TAPE CARTRIDGE HAVING GUIDE SURFACE", filed July 24, 2003, and which is incorporated herein by reference in its entirety as if fully set forth herein.

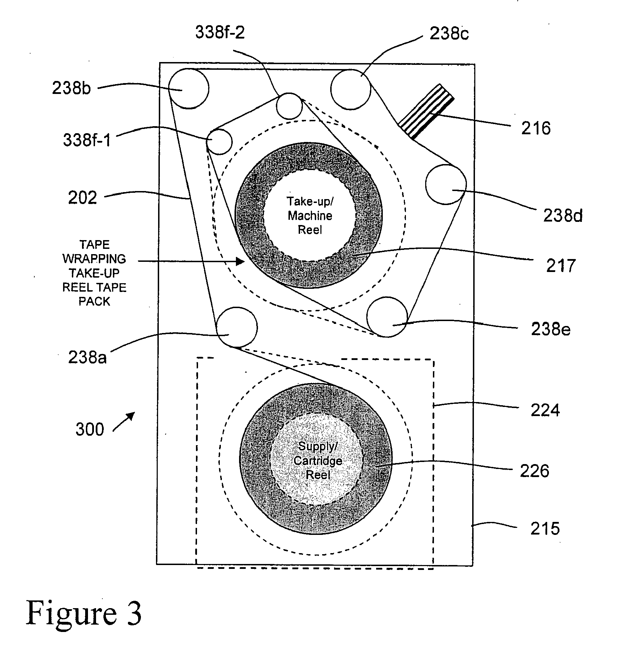

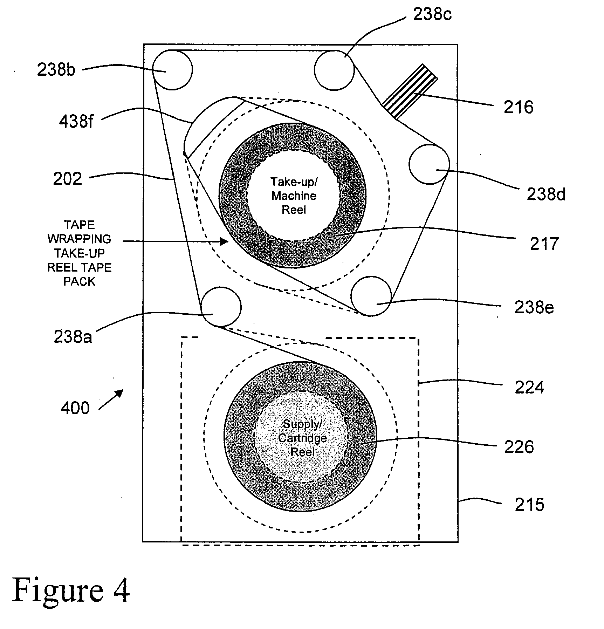

**Figures 3 and 4** illustrate various cross-sectional views of exemplary media drives according to other examples. **Figures 3 and 4** are similar to **Figure 2** and only differences are described in detail.

**Figure 3** illustrates an exemplary media drive 300, including additional guide elements 338f-1 and 338f-2 disposed to result in the tape path wrapping a portion of take-up reel 217 and further increasing the tape path as described above with reference to **Figure 2.** In this example, guide elements 338f-1 and 338f-2 may include smaller guide elements and be positioned closer to take-up reel 217 (e.g., closer than guide element 238 of **Figure 2**). The position of guide elements 338f-1 and 338f-2 may reduce the wrap angles of tape 202 to guide elements 338f-1 and 338f-2 (e.g., compared with a single guide element as illustrated in **Figure 2**), thereby further reducing wear on tape 202 during operation.

**Figure 4** illustrates another exemplary media drive 400 including a guide element 438f. In this example, guide element 438f includes a contoured (non-cylindrical) guide element for guiding tape 202. Guide element 438f may be positioned close with respect to take-up reel 217 to reduce the space needed for the tape path. Guide element 43 8f may include various materials, e.g., plastic, ceramic, or the like, which may have various contoured surfaces for guiding tape 202. In this example, guide element 438f is a stationary guide surface (non-rotational) and may be desired to frictionally dampen lateral tape motion of tape 202. In other examples, guide element 428f may be replaced by two or more separate guide elements which create a similar path length, but, for example, include rotating guide elements (e.g., as shown in **Figure 3**).

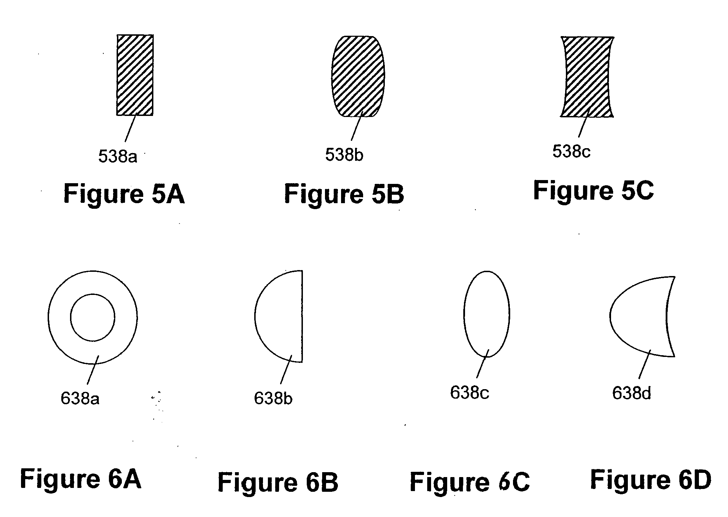

**Figures 5A-5C** illustrate various cross-sectional side views of exemplary cylindrical shaped guide elements 538a-c. The exemplary cylindrical guide elements 538a-c may include stationary elements or rotating elements. Further, the exemplary guide elements 538a-c may include any surface of revolution such as concave or convex guide surfaces as shown in **Figures 5B and 5C** to assist in guiding the storage tape and/or reducing potential damage to the storage tape during operation.

**Figures 6A-6D** illustrate various top views of exemplary guide elements 638a-d. As illustrated, various guide elements are contemplated and may include a variety of shapes and designs to create desired guide surfaces, wrap angles, and the like. The various guide elements 638a-d may be used alone or in any combination depending on the particular application. The various guide surfaces may also be oriented in different configurations, include a compound radius surface, and the like to create different wrap angles with the storage tape.

The above detailed description is provided to illustrate exemplary embodiments and is not intended to be limiting. It will be apparent to those of ordinary skill in the art that numerous modification and variations within the scope of the present invention are possible. For example, various exemplary methods and systems described herein may be used alone or in combination with various other media drive systems and related methods whether described herein or otherwise including, e.g., optical and/or magnetic media drive systems. Additionally, particular examples have been discussed and how these examples are thought to address certain disadvantages in related art. This discussion is not meant, however, to restrict the various examples to methods and/or systems that actually address or solve the disadvantages.

## Claims

1. A tape drive, comprising:
a housing adapted to receive a storage cartridge comprising a supply reel, the housing having a take-up reel and a plurality of guide elements disposed therewith, wherein the guide elements are positioned to:
guide a storage tape from the supply reel to the take-up reel along a tape path, the tape path passing a data transducer head and wrapping a portion of the take-up reel at a first location and winding onto the take-up reel at a second location.

2. The tape drive of claim 1, wherein a first portion of the tape path from the supply reel to the data transducer head and a second portion of the tape path from the take-up reel to the data transducer head are approximately equal in length.

3. The tape drive of claim 1, wherein the tape path includes a first portion from the supply reel to the data transducer head and a second portion from the take-up reel to the data transducer head, and the distance of the second portion is at least 80% of the distance of the first portion.

4. The tape drive of claim 1, wherein the tape path includes a first portion from the supply reel to the data transducer head and a second portion from the take-up reel to the data transducer head, and the distance of the first portion and the second portion are proportional to the lateral tape motion produced along the tape path in the first portion and second portion.

5. The tape drive of claim 1, wherein the first location and the second location are positioned along the tape path between the data transducer head and the take-up reel.

6. The tape drive of claim 1, wherein at least one of the plurality of guide elements includes a rotatable surface.

7. The tape drive of claim 1, wherein at least one of the plurality of guide elements includes a stationary surface.

8. A media drive, comprising:
a first reel;
a second reel;
a data transducer head; and
a plurality of guide elements, wherein the guide elements are positioned to guide a storage tape from the first reel to the second reel such that the tape passes the data transducer head, wraps a portion of the second reel at a first location, and winds onto the second reel at a second location.

9. The media drive of claim 8, wherein the first reel is associated with a removable storage device disposed with the media drive.

10. The media drive of claim 8, wherein the second reel includes a take-up reel.

11. The media drive of claim 8, wherein a first portion of the tape path from the first reel to the data transducer head and a second portion of the tape path from the second reel to the data transducer head are approximately equal in length.

12. The media drive of claim 8, wherein the tape path includes a first portion from the first reel to the data transducer head and a second portion from the second reel to the data transducer head, and the distance of the second portion is at least 80% of the distance of the first portion.

13. The media drive of claim 8, wherein the first location and the second location are positioned along the tape path between the data transducer head and the second reel.

14. The media drive of claim 8, wherein at least one of the plurality of guide elements includes a rotatable surface.

15. The media drive of claim 8, wherein at least one of the plurality of guide elements includes a stationary surface.

16. A method for moving a data storage tape within a media drive, comprising:
streaming a storage tape along a tape path from a supply reel to a take-up reel, the tape path passing a data transducer head, wherein
the tape path wraps a portion of the take-up reel at a first location and winds onto the take-up reel at a second location.

17. The method of claim 16, wherein a first portion of the tape path from the supply reel to the data transducer head and a second portion of the tape path from the take-up reel to the data transducer head are approximately equal in length.

18. The method of claim 16, wherein the tape path includes a first portion from the supply reel to the data transducer head and a second portion from the take-up reel to the data transducer head, and the distance of the second portion is at least 80% of the distance of the first portion.

19. The method of claim 16, wherein the first location and the second location are positioned along the tape path between the data transducer head and the take-up reel.
